# EUROPEAN PATENT APPLICATION

(11) **EP 1 749 452 A2**
(43) Date of publication of application: **07.02.2007**
(21) Application number: 06015967.0
(22) Date of filing: 01.08.2006
(51) Int. Cl.: A41H 1/00, A41H 1/02, A41H 3/00

(54) **Method and apparatus for making cloth articles**

(30) Priority: 04.08.2005 IT MI20051539
(71) Applicant: Lo Bosco, Giuseppe, 20121 Milano (IT)
(72) Inventor: Lo Bosco, Giuseppe, 20121 Milano (IT)
(74) Representative: Cicogna, Franco

(57) **Abstract**

A method for making cloth articles comprises the steps of measuring, at a selling point (2), the person designed for wearing the finished cloth article, telematically sending the taken measurements to a tailor's electronic processor (4), processing the sent measurements and generating a file to be telematically sent to the selling point (2), where a plotter (5) prints the cloth article contours for making a pattern sheet (6), causing the person to wear the pattern sheet (6) and pinning the pattern sheet (6) on the person so that the pattern sheet perfectly adheres to the person body and, at the end of the pinning step taking a series of photos of the person wearing the pattern sheet (6), and then sending the photos and pattern sheet (6) to the tailor's shop (3) for evaluating the wearableness and cutting parameters of the fabric, depending on the nature of the fabric and the body of the person.

## Description

### BACKGROUND OF THE INVENTION

The present invention relates to a method and an apparatus for making cloth articles.

As is known, for making a tailor's cloth article it is conventionally necessary that the tailor takes the measurements of the clients and then try on the cloth article before definitely seaming the cloth article.

The above operations must be necessarily performed by the tailor, since it is necessary the skillness and operating capability of a tailor to properly evaluate the wearableness parameters of the client to properly cut the fabric, depending on the nature of the latter and the body of the client.

### SUMMARY OF THE INVENTION

Accordingly, the aim of the present invention is to provide a method allowing to make a tailor's cloth article without the need, by the tailor, to encounter the client.

Within the scope of the above aim, a main object of the invention is to provide such a cloth article making method allowing to make the cloth article in a tailor's shop physically separated from the selling point or points accessed by the clients.

Yet another object of the present invention is to provide such a cloth article making method allowing to make very accurate cloth articles.

According to one aspect of the present invention, the above mentioned aim and objects, as well as yet other objects, which will become more apparent hereinafter, are achieved by a method for making a cloth articles, characterized in that said method comprises the steps of:
taking physical body measurements of the person designed to wear the cloth article being made;
sending the measurements to an electronic processor;
process the sent measurements and providing a pattern sheet, reproducing the person contours;
causing the person to wear the pattern sheet and pinning the pattern sheet to cause said pattern sheet to perfectly adhere to the body of the person;
taking, at the end of the pinning step, one or more photos of the person wearing the pattern sheet; and
sending the photos and pattern sheet to the tailor's shop for evaluating the wearableness parameters and cutting parameter of the fabric material, depending on the nature of said fabric material and body of said person.

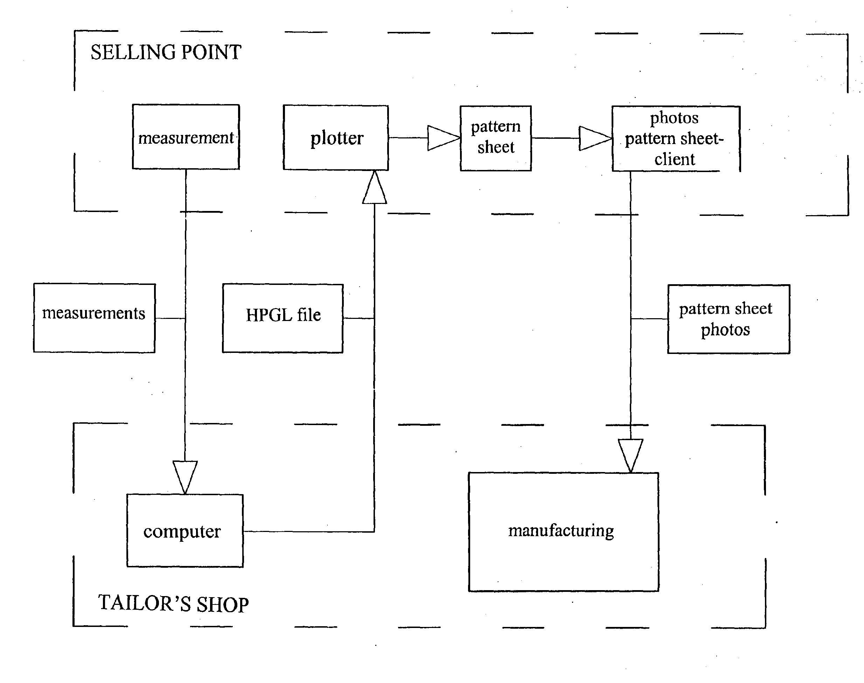

### BRIEF DESCRIPTION OF THE DRAWING

Further characteristics and advantages of the subject matter of the present invention will become more apparent hereinafter from the following detailed disclosure of a preferred, though not exclusive, embodiment of the invention, which is illustrated, by way of an indicative, but not limitative, example in the accompanying drawing, the single figure of which shows a flow diagram of the method for making cloth articles according to the present invention.

### DESCRIPTION OF THE PREFERRED EMBODIMENT

The inventive method is carried out at a selling point 2 and at a tailor's shop 3 which can be physically separated places.

More specifically, at the selling point 2, the client or person designed for wearing the cloth article is measured, in a per se conventional manner, for example by measuring his/her height, weight, trunk circumference, waist circumference, trouser circumference, arm length, pelvis circumference, groin circumference, leg length (from inside the groin to the foot) and, for a woman, the breast circumference.

Then, the client measurements are telematically sent, for example by E-mail, to the tailor's shop 3, for processing in a computer 4, through a suitable software, to generate a HPGL file, which will be telematically sent to a plotter 5 provided at the selling point.

The plotter 5, in particular, will print the contour of the cloth article component pieces, and the print-out will be used for making a pattern sheet 6, which preferably comprises a polypropylene non-woven fabric material.

The pattern sheet 6 will be so designed as to perfectly adhere, as a "second" skin, to the body of the client.

Then, at the selling point 2, the pattern sheet will be put on the client and properly arranged, by clips such as pins or strips, to perfectly adhere to the client body.

Then, with the pattern sheet perfectly arranged on the client body, three photos will be taken, that is: a front photo, a side photo and a rear photo.

Then, the pattern sheet 6 and photos will be sent to the tailor's shop where they will be used for evaluating the wearableness parameters and fabric cutting, depending of the nature of the fabric material and the client body.

It has been practically found that the invention fully achieves the intended aim and objects.

In fact, the invention provides a method and system allowing to accurately make cloth articles, without compelling the client to personally access the tailor's shop.

In fact, it is sufficient that, at the selling point, the personnel herein provided is able of performing simple anthropometric measurements and photos, to be used at the tailor's shop by skilled personnel.

In practicing the invention, the used materials, and the contingent size and shapes, can be any, according to requirements.

## Claims

1. A method for making a cloth articles, **characterized in that** said method comprises the steps of:
taking physical body measurements of the person designed to wear the cloth article being made;
sending the measurements to an electronic processor;
process the sent measurements and providing a pattern sheet, reproducing the person contours;
causing the person to wear the pattern sheet and pinning the pattern sheet to cause said pattern sheet to perfectly adhere to the body of the person:
taking, at the end of the pinning step, one or more photos of the person wearing the pattern sheet; and
sending the photos and pattern sheet to the tailor's shop for evaluating the wearableness parameters and cutting parameters of the fabric material, depending on the nature of said fabric material and body of said person.

2. A method according to claim 1, **characterized in that** said method steps are carried out at a selling point and at a tailor's shop, said selling point and tailor's shop being physically separated places.

3. A method according to claim 1, **characterized in that** the measurements of the person are taken at the selling point.

4. A method according to claim 1, **characterized in that** said measurements comprise, for making said cloth article, the client's height, weight, trunk circumference, waist circumference, trouser circumference, arm length, pelvis circumference, groin length, leg length (from the inside of the groin to the foot) and, for a woman, a breast circumference.

5. A method according to claim 1, **characterized in that** said measurements are telematically sent, for example by E-mail, to the tailor's shop, where said measurements are processed in a computer controlled by a suitable control software to provide a HPGL file to be telematically sent to a plotter arranged at said selling point.

6. A method according to claim 5, **characterized in that** said plotter is adapted to print-out a contour of the cloth article component parts, the print-out being used for making said pattern sheet.

7. A method according to claim 6, **characterized in that** said pattern sheet comprises a non-woven polypropylene fabric material.

8. A method according to claim 1, **characterized in that** said pattern sheet is so made as to be adapted to perfectly adhere, as a second skin, to the body of the client.

9. A method according to claim 1, **characterized in that** said pinning is carried out by clip elements such as pins or strips, to allow said pattern sheet to perfectly adhere to the body of the client.

10. A method according to claim 1, **characterized in that**, with said pattern sheet perfectly arranged on the body of the client, three photos of the client are taken, that is: a front photo, a side photo and a rear photo.

11. A method according to claim 10, **characterized in that** said pattern sheet and photos are sent to the tailor's shop where they are used for evaluating the wearableness parameters and fabric cutting, depending on the fabric nature and body of the client.

12. An apparatus for making cloth articles by a method according to claim 1, **characterized in that** said apparatus comprises a data sending system for sending data comprising the measurements of a person from a selling point to a tailor's shop, electronic processing means adapted to provide a drive file for driving means adapted to print the contour of parts constituting said cloth article, said printing being used for making a pattern sheet and that said apparatus further comprises photographic means for providing photos of said pattern sheet put on the body of the person or client.

13. An apparatus according to claim 12, **characterized in that** said electronic processing means are arranged at a tailor's shop whereas the printing and photographic means are arranged at said selling point.

14. An apparatus according to claim 12, **characterized in that** the data sending system is a telematic system such as the internet.

15. An apparatus according to claim 12, **characterized in that** said electronic processing means comprise a computer including a computer software adapted to provide a HPGL file to be telematically sent to said printing means.

16. An apparatus according to claim 15, **characterized in that** said printing means comprise a plotter.

17. An apparatus according to claim 12, **characterized in that** said pattern sheet comprises a non-woven polypropylene fabric material.
